# EUROPÄISCHE PATENTANMELDUNG

(11) **EP 2 100 885 A1**
(43) Veröffentlichungstag der Anmeldung: **16.09.2009**
(21) Anmeldenummer: 08004769.9
(22) Anmeldetag: 14.03.2008
(51) Int. Cl.: C07D 273/04, C07D 251/34, C07D 229/00, C08G 18/79, C08G 18/16, B01J 31/02

(54) **Herstellung von Polyisocyanaten vom Trimertyp**

(71) Anmelder: Bayer MaterialScience AG, 51368 Leverkusen (DE)
(72) Erfinder: Richter, Frank Dr., 51373 Leverkusen (DE); Halpaap, Reinhard Dr., 51519 Odenthal (DE)

(57) **Zusammenfassung**

Die Erfindung betrifft die Verwendung von Heterocyclen, die dreibindigen Phosphor als Ringglied enthalten, als Katalysatoren für die Isocyanatmodifizierung und ein Verfahren zur Herstellung von Polyisocyanaten vom Trimertyp.

## Beschreibung

Die Erfindung betrifft die Verwendung von Heterocyclen, die dreibindigen Phosphor als Ringglied enthalten, als Katalysatoren für die Isocyanatmodifizierung und ein Verfahren zur Herstellung von Polyisocyanaten vom Trimertyp.

Polyisocyanate werden in der Regel durch katalysierte Modifizierung monomerer Isocyanat-Ausgangsstoffe, häufig Diisocyanate, hergestellt. Gegenüber ersteren zeichnen sie sich u.a. durch einen wesentlich niedrigeren Dampfdruck und, dadurch bedingt, bessere physiologische Verträglichkeit aus. Werden aus NCO-difunktionellen Diisocyanaten NCO-tri- und höherfunktionelle Polyisocyanate hergestellt, weisen diese Produkte zusätzlich den Vorteil einer höheren Vemetzungsdichte in aus ihnen generierten Polymeren, z.B. Beschichtungen, auf. Besonders vorteilhaft sind in diesem Zusammenhang Isocyanat-Trimere vom Isocyanurat- sowie Iminooxadiazindiontyp (hier vereinfachend summarisch als Trimertyp' bezeichnet). Iminooxadiazindione weisen gegenüber den auf dem gleichen Monomer basierenden Isocyanuraten gleicher Molekulargewichtsverteilung den Vorteil einer deutlich niedrigeren Viskosität bei ansonsten unverändert hohem Eigenschaftsprofil auf (vgl. EP-A 798 299).

Allen für die Herstellung der Polyisocyanate vom Trimertyp vorbeschriebenen Katalysatoren des Standes der Technik haftet der Nachteil an, dass sie sich nach der katalysierten Reaktion nicht unzersetzt, optional gemeinsam mit dem nicht umgesetzten Anteil des zu modifizierenden Diisocyanates, zurückgewinnen lassen. In der Regel verbleiben sie, meist in desaktivierter Form, in den Verfahrensprodukten und/oder in den nicht umgesetzten, in der Regel im Kreise geführten Edukten (Monomer). Dort können sie zu unerwünschten Folgereaktionen wie Farbvertiefung, NCO-Drifts etc. Anlass geben oder anderweitig nachteilig wirken, z.B. durch eine zunehmende Verunreinigung des in der Regel im Kreise geführten Monomers. Hinzu kommt, dass die bekannten Trimerisierungskatalysatoren des Standes der Technik erst bei höherer Temperatur wirksam werden und ihre Wirkung häufig erst nach einer gewissen 'Induktionsperiode' einsetzt, was verfahrenstechnisch störend ist. Ganz abgesehen davon verbietet sich ein technischer Einsatz höherpreisiger Katalysatoren aus ökonomischen Gesichtspunkten.

Die Rückführung des Modifizierungskatalysators ohne, ggf. intermediäre Überführung in eine andere Form gelingt bisher nur bei Phosphinen (Phosphanen) sowie speziellen Pyridinen, insbes. 4-Dialkylaminopyridinen wie z.B. 4-Dimethylaminopyridin (DMAP) (DE-A 10354544, DE-A 10254878 sowie J. Prakt. Chem./Chem. Ztg. 1994, 336, 185-200). Phosphine und 4-Dialkylaminopyridine liefern allerdings vorwiegend Uretdiongruppen enthaltende Polyisocyanate, welche daher eine niedrige mittlere NCO-Funktionalität aufweisen. Als alleiniger Baustein zur Herstellung hochverzweigter Polyurethan-Polymere, insbesondere auf dem Lack- und Beschichtungsmittelsektor, sind sie nur bedingt geeignet.

Zwar sollen nach der Lehre der DE-A 1 670 720 bei der Verwendung von Phosphinen zur Isocyanat-Modifizierung bei höherer Reaktionstemperatur bzw. bei höherem Monomerumsatz steigende Anteile an Isocyanat-Trimeren gebildet werden, gleichzeitig finden sich dann aber nicht zu vernachlässigende Anteile anderer Nebenprodukte wie Carbodiimide und Uretonimine in den Verfahrensprodukten. Uretonimine sind ganz besonders störend, da sie bei der Lagerung zur Freisetzung von monomerem Isocyanat neigen und die Produkte dann physiologisch nicht mehr einwandfrei sind. Auch nimmt der Uretdionanteil bei der Phosphin-katalysierten Isocyanatmodifizierung mit Temperatur- bzw. Umsatzerhöhung nicht in dem Maße ab, dass man bei Umsetzungen im technisch sinnvollen Temperatur- und Umsatzbereich wirklich von der hauptsächlichen Bildung von Produkten vom Trimertyp sprechen könnte (Vergleichsbeispiele 1 bis 4).

Ganz allgemein nimmt die Phosphin-katalysierte Isocyanat-Oligomerisierung einen anderen Verlauf, wenn in Gegenwart von aromatischen Isocyanaten gearbeitet wird (vgl. u.a. GB 1 244 416, US 3 645 979, GB 856 372, US 2 671 082). Hierbei tritt die Isocyanat-'Trimerisierung' (insbes. die Isocyanuratbildung) deutlich in den Vordergrund (Vergleichsbeispiel 5). Den vorstehend genannten Patentschriften ist neben dem Verweis auf zahlreiche andere Phosphine, die als Katalysatoren geeignet sein sollen, in langen Listen auch gelegentlich die Angabe zu entnehmen, dass 1-Butyl-phosphacyclopentan (1-Butylphospholan) bzw. 1-Phenyl-3-methyl-phospholen-3 für die Polymerisation von Isocyanaten geeignet sein soll. In wie weit sich nun gezielt Isocyanurate oder Iminooxadiazindione aus rein aliphatischen Isocyanaten mittels solcher Katalysatoren herstellen lassen, ist den genannten Patentschriften nicht zu entnehmen. Dies ist insbesondere deshalb zweifelhaft, da dort genannte Trialkylphosphine im Zusammenhang mit aliphatischen Isocyanaten bekanntermaßen hochaktive Katalysatoren für die Uretdionbildung sind, in GB 1 244 416 sogar mit einem Beispiel belegt, während sie in Mischungen aus aliphatischen und aromatischen Isocyanaten Mischtrimere bilden, die nur wenig Iminooxadiazindion enthalten. Weiterhin werden in US 2 671 082 explizit Phenyl-dimethylphosphin sowie Phenyl-di(n-butyl)phosphin als bevorzugte Katalysatoren beschrieben, die, wie eigene Untersuchungen belegen, keine katalytische Aktivität gegenüber aliphatischen Isocyanaten aufweisen (Vergleichsbeispiel 6). Das Gleiche gilt für das 1-Phenyl-3-methyl-phospholen-3 (Vergleichsbeispiel 7).

Weiterhin wurde Butyl-phosphacyclopentan (Butylphospholan), neben anderen Trialkylphosphinen, auch in EP-A 1 174 428 als optional geeigneter Katalysator für die Dimerisierung von Isocyanaten zu Uretdionen beschrieben. Dort wird die prinzipielle Eignung dieser Substanzen zu diesem Zweck beschrieben, wobei sie gemäß der Lehre des Dokuments in Kombination mit speziellen Harnstoffen oder Amiden einzusetzen sind. Hinweise auf eine zu typischen Trialkylphosphinen wie Tri-n-Butylphosphin abweichende Reaktivität des Butylphospholans ist EP-A 1 174 428 zufolge nicht gegeben. Wie den Vergleichsbeispielen 8 und 9 zu entnehmen ist, weisen die ebenfalls in EP-A 1 174 428 als optional für geeignet erklärten sterisch gehinderten Phosphine Tri(tertiärbutyl)phosphin und Tri(iso-propyl)phosphin keine katalytische Aktivität auf.

Aus US 2 853 473 ist bekannt, dass sich Phospholan-P-Oxide zur Carbodiimidbildung von Isocyanaten einsetzen lassen. Gemäß US 2 853 518 sollen sich auch die Sauerstoff-freien, dreibindigen Phosphor enthaltenden Pendants dieser P-Oxide zu diesem Zweck eignen. Die in US 2 853 518 beschriebenen Umsetzungen erfolgen bei erhöhter Temperatur, in der Regel ohne weitere Schutzmaßnahmen wie Inertgasatmosphäre, bei in der Regel hohen Katalysatorkonzentrationen sowie langen Reaktionszeiten wobei unmittelbar die für die Carbodiimidbildung charakteristische Entwicklung von gasförmigem CO₂ zu beobachten ist. Aufgrund der bekannten Oxidationsneigung von dreiwertigen Phosphor enthaltenden Verbindungen und dem Fehlen von Schutzmaßnahmen, die sicherstellen, dass in der Umsetzung in der Tat Phospholane und nicht deren P-oxidierte Analoga und andere denkbare Oxidationsprodukte vorliegen, erscheint es jedoch äußerst fraglich, dass in den Beispielen gemäß US 2 853 518 wirklich die katalytische Wirkung von Phospholanen beobachtet wurde.

Es wurde nun überraschenderweise gefunden, dass, wenn beispielsweise durch Anwesenheit einer Inertgasatmosphäre sichergestellt ist, dass nur dreiwertiger Phosphor vorliegt, Phospholane und andere Phosphin-Derivate, in denen der dreiwertige Phosphor über zwei seiner Einfachbindungen Teil eines organischen Ringsystems ist, die gezielte Bildung von Isocyanuraten und Iminooxadiazindionen aus aliphatischen und/oder cycloaliphatischen Isocyanaten katalysiert, wobei Produkte erhalten werden, die arm an Uretdionen und im wesentlichen frei von Carbodiimiden und Uretoniminen sind. Ferner verläuft die Umsetzung über den gesamten angestrebten Umsetzungsbereich auch bei niedrigen Reaktionstemperaturen sehr gleichmäßig, ohne Induktionsperiode und ohne signifikanten Aktivitätsabfall während der katalysierten Umsetzung und mit vergleichsweise hohem Iminooxadiazindiongruppen-Anteil im Produkt. Die Katalysatoren können im Anschluss an die Reaktion, z.B. gemeinsam mit dem zu modifizierenden Monomer, zurück gewonnen und anschließend erneut eingesetzt werden.

Gegenstand der Erfindung ist ein Verfahren zur Herstellung von Polyisocyanaten aus aliphatischen und/oder cycloaliphatischen Isocyanaten mit einem Anteil an Isocyanurat- und Iminooxadiazindion-Strukturen im gebildeten Polyisocyanat oberhalb 60 mol%, einem Anteil an Uretdionstrukturen unterhalb 25 mol% und einem Anteil an Carbodiimid- und Uretoniminstrukturen unter 5 mol%, bezogen auf die Summe aller aus den vorher freien Isocyanatgruppen gebildeten Strukturtypen, bei dem als Katalysatoren Heterocyclen der Formel (I) eingesetzt werden 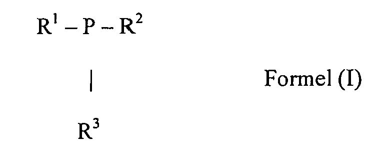 wobei
- R¹: ein ggf. cyclischer, aliphatischer C₁-C₅₀-Rest ist, der ein- oder mehrfach ungesättigt und/oder ein- oder mehrfach C₁-C₂₀ alkyl- oder alkoxy- substituiert sein kann und
- R², R³: untereinander und mit dem Phosphoratom sowie ggf. mit R¹ einen cycloaliphatischen C₂-C₂₀-Rest bilden, der ein- oder mehrfach C₁-C₂₀ alkyl- oder alkoxysubstituiert, polycyclisch und/oder ein- oder mehrfach ungesättigt sein kann.

### Bevorzugt sind Verbindungen der Formel (I), in denen

R¹ ein ggf. cyclischer, aliphatischer C₁-C₅₀-Rest ist, der ein- oder mehrfach ungesättigt und/oder ein- oder mehrfach C₁-C₈ alkyl- oder alkoxy- substituiert sein kann und

R², R³ untereinander und mit dem Phosphoratom einen cycloaliphatischen C₂-C₂₀-Rest bilden, der ein- oder mehrfach C₁-C₂₀ alkyl- oder alkoxy- substituiert und/oder bicyclisch sein kann.

### Besonders bevorzugt sind Verbindungen der Formel (I), in denen

R¹ ein ggf. cyclischer, aliphatischer C₁-C₁₂-Rest ist, der ein- oder mehrfach C₁-C₈ alkyl- oder alkoxy- substituiert sein kann und

R² und R³ untereinander und mit dem Phosphoratom einen gesättigten cycloaliphatischen C₄-C₆-Rest bilden, der ein- oder mehrfach C₁-C₂₀ alkyl- oder alkoxy- substituiert und/oder bicyclisch sein kann.

Beispiele erfindungsgemäß einzusetzender Heterocyclen der Formel (I) sind 1-Methyl-1-phospholan, 1-Ethyl-1-phospholan, 1-Propyl*-1-phospholan, 1-Butyl*-1-phospholan, 1-Pentyl*-1-phospholan, 1-Hexyl*-1-phospholan, 1-Octyl*-1-phospholan, 9-Methyl-9-phosphabicyclononan****, 9-Ethyl-9-phosphabicyclononan**, 9-Propyl*-9-phosphabicyclononan**, 9-Butyl*-9-phosphabicyclononan**, 9-Pentyl*-9-phosphabicyclononan**, 9-Hexyl*-9-phosphabicyclononan**, 9-Octyl*-9-phosphabicyclononan**, 9-Dodecyl*-9-phosphabicyclononan**, 9-Eicosyl*-9-phosphabicyclononan** in reiner Form oder als beliebige Mischungen untereinander.
* Propyl-, Butyl-, Pentyl- etc. steht immer für alle isomeren C₃-, C₄-, C₅- etc. Reste, incl. der Carbocyclen, **9-phosphabicyclononan, Trivialname: Phoban, umfasst insbes. die beiden Isomeren 9-phosphabicyclo-[3.3.1]-nonan sowie 9-Phosphabicyclo-[4.2.1]-nonan, welche bei der Synthese üblicherweise als Gemisch anfallen.

Alle vorstehend genannten Katalysatoren können einzeln, in beliebigen Mischungen untereinander oder in Mischungen mit anderen primären, sekundären und/oder tertiären Alkyl- Aralkyl- und/oder Arylphosphinen sowie 4-Dialkylaminopyridinen verwendet werden.

Das erfindungsgemäße Verfahren wird bevorzugt so geführt, dass mindestens ein organisches Isocyanat mit wenigstens einer Verbindung gemäß Formel (I), optional Lösemitteln und optional Additiven zur Reaktion gebracht werden und die Reaktion so geführt wird, dass der Umsatz der freien NCO-Gruppen zum Polyisocyanat vom Trimertyp 1 bis 100 %, bevorzugt 5 bis 80 %, beträgt.

Die Menge des im erfindungsgemäßen Verfahren einzusetzenden Katalysators richtet sich in erster Linie nach der angestrebten Reaktionsgeschwindigkeit bei gegebener Reaktionstemperatur und liegt im Bereich von 0,001 bis 5 Mol.-%, bezogen auf die Summe der Stoffmenge des/der umzusetzenden (Di)Isocyanate(s) und des Katalysators. Bevorzugt werden 0,01 bis 3 Mol.-% Katalysator, insbesondere 0,01 bis 1 Mol-%, eingesetzt.

Der Katalysator b) kann im erfindungsgemäßen Verfahren unverdünnt oder in Lösungsmitteln gelöst eingesetzt werden. Als Lösungsmittel kommen dabei alle Verbindungen in Frage, die unter den Reaktionsbedingungen nicht mit Phosphinen reagieren wie z.B. ggf. halogenierte (F, Cl, nicht Br, I), aliphatische oder aromatische Kohlenwasserstoffe, Alkohole, Ketone, Ester sowie Ether.

Mit den erfindungswesentlichen Katalysatoren können prinzipiell alle bekannten, durch Phosgenierung oder nach phosgenfreien Verfahren hergestellten organischen Isocyanate mit aliphatisch und/oder cycloaliphatisch gebundenen Isocyanatgruppen einzeln oder in beliebigen Mischungen untereinander trimerisiert werden.

Bevorzugt ist die Verwendung von aliphatischen, cycloaliphatischen oder araliphatischen Di- oder Polyisocyanaten einer NCO-Funktionalität ≥ 2.

Beispielhaft genannt seien Pentandiisocyanate, Hexandiisocyanate, Heptandiisocyanate, Octandiisocyanate, Nonandiisocyanate, Dekandiisocyanate, Undekandiisocyanate, Dodecandiisocyanate sowie Tridecandiisocyanate, wobei beliebige Isomere der vorstehend genannten Verbindungen, incl. der Carbocyclen, rein oder in beliebiger Abmischung untereinander zum Einsatz kommen können.

Insbesondere werden Hexamethylendiisocyanat (HDI), Methylpentandiisocyanat (MPDI), Trimethylhexandiisocyanat (TMDI), Bis(isocyanatomethyl)cyclohexan (H₆XDI), Norbornandiisocyanat (NBDI), Isophorondiisocyanat (IPDI), Bis(isocyanatocyclohexyl)-methan (H₁₂MDI), einzeln oder in beliebigen Mischungen untereinander eingesetzt.

Das erfindungsgemäße Verfahren wird im Temperaturbereich 0°C bis 150°C, bevorzugt 0°C bis 100°C, besonders bevorzugt 20°C bis 80°C durchgeführt.

Bevorzugt wird das erfindungsgemäße Verfahren in Anwesenheit von Inertgasen durchgeführt. Bevorzugt beträgt dabei der Sauerstoffanteil in der Inertgasatmosphäre unter der die katalytische Umsetzung durchgeführt wird, weniger als 1 Vol.-%, bevorzugt weniger als 0,1 Vol.-%.

Bevorzugt wird die Umsetzung der NCO-Gruppen jedoch nicht bis zu einem Grad von 100 % geführt, sondern vorher abgebrochen und der Reaktionsansatz aufgearbeitet.

Bevorzugt enthält die Reaktionsmischung bei vollständigem NCO-Umsatz oder zum Zeitpunkt des Reaktionsabbruchs mehr als 60 mol%, besonders bevorzugt mehr als 70 mol% an Trimerstukturen, bezogen auf die Gesamtheit der Strukturtypen, die aus den vor der katalysierten Umsetzung in freier Form vorliegenden NCO-Gruppen des Ausgangsisocyanat(gemisch)es gebildet werden.

Bevorzugt enthält die Reaktionsmischung bei vollständigem NCO-Umsatz oder zum Zeitpunkt des Reaktionsabbruchs weniger als 25 mol% besonders bevorzugt weniger als 20 mol% an Uretdionstrukturen und weniger als 5 mol%, besonders bevorzugt weniger als 2 mol% an Carbodiimid-und/oder Uretoniminstrukturen, wiederum bezogen auf die Gesamtheit der aus den vorher freien NCO-Gruppen des Ausgangsisocyanat(gemisch)es resultierenden Strukturtypen.

Zum Abbruch der Reaktion nach Erreichen des gewünschten Umsetzungsgrades eignen sich prinzipiell alle vorbeschriebenen Katalysatorgifte, auch wenn diese Herangehensweise nicht bevorzugt ist, (DE-A 1670667, 1670720, 1934763, 1954093, 3437635, US 4614785) wie Alkylierungsmittel (z.B. Dimethylsulfat, Toluolsulfonsäuremethylester), organische oder anorganische Peroxide, Säurechloride sowie Schwefel, die mit dem Katalysator ggf. unter Temperaturerhöhung zur Reaktion gebracht werden. Nach der Desaktivierung der Reaktionsmischung kann dann nicht umgesetztes Monomer und/oder der desaktivierte Katalysator abgetrennt werden (Variante A).

Bevorzugt wird das erfindungsgemäße Verfahren jedoch ohne chemische Desaktivierung des Katalysators durchgeführt. Dazu wird nach Erreichen des gewünschten Umsatzes der aktive Katalysator aus der Reaktionsmischung abgetrennt, um eine Weiterreaktion ggf. unter Nebenproduktbildung zu unterbinden. Gleichzeitig mit oder auch nach der Katalysatorabtrennung kann nicht umgesetztes Monomer abgetrennt werden. Bevorzugt wird das nicht umgesetzte Monomer gemeinsam mit dem Katalysator vom Produkt abgetrennt (Variante B).

Im erfindungsgemäßen Verfahren können zur Abtrennung nicht umgesetzter Monomere, des Katalysators und/oder anderer unerwünschter Bestandteile aus der Reaktionsmischung alle bekannten Separationstechniken wie z.B. Destillation, Extraktion oder Kristallisation/Filtration verwendet werden. Selbstverständlich können auch Kombinationen zweier oder mehrerer dieser Techniken angewendet werden.

Soll das erfindungsgemäß hergestellte Polyisocyanat noch freies, nicht umgesetztes Monomer enthalten, kann nach Reaktionsabbruch auf die Monomerabtrennung verzichtet werden.

Es ist für die Durchführung des erfindungsgemäßen Verfahrens unerheblich, ob das Verfahren ganz oder teilweise diskontinuierlich oder kontinuierlich durchgeführt wird.

Bevorzugt wird bei der Verfahrensweise ohne Katalysatordesaktivierung eine zumindest bzgl. der katalysierten Reaktion (semi)kontinuierliche Reaktionsführung angewendet, da der Katalysator so optimal bzgl. Raum-Zeit-Ausbeute eingesetzt wird.

Weiterhin können im erfindungsgemäßen Verfahren zu einem beliebigen Zeitpunkt in der Polyisocyanatchemie übliche Additive und Stabilisatoren zugesetzt werden. Beispiele sind Antioxidanzien, wie z.B. sterisch gehinderte Phenole (2,6-Di-tert.butylphenol, 4-Methyl-2,6-di-tert.butylphenol), Lichtschutzmittel, wie z.B. HALS-Amine, Triazole etc., schwache Säuren oder Katalysatoren für die NCO-OH-Reaktion wie z.B. Dibutylzinndilaurat (DBTL).

Des weiteren kann es sinnvoll sein, einem nach Variante B aufgearbeiteten Produkt geringe Mengen eines in Variante A zu verwendenden Katalysatorgiftes zuzusetzen, um die Rückspaltstabilität zu erhöhen, die Neigung zu Nebenproduktbildung bzw. Weiterreaktion der freien NCO-Gruppen und/oder die Vergilbungstendenz insbes. bei Produktlagerung zu verringern.

Nach dem erfindungsgemäßen Verfahren hergestellte Produkte auf Basis ggf. verzweigter, linearaliphatischer Di- oder Polyisocyanate, die keine Cycloalkylsubstituenten aufweisen, sind farbhell und haben eine Viskosität <2000 Pas/23°C. Werden cycloaliphatische und/oder aliphatische Di-oder Polyisocyanate eingesetzt, werden hochviskose bis feste Harze erhalten (Viskosität > 20000 Pas/23°C).

In monomerenarmer Form, d.h. nach Abtrennung von nicht umgesetztem Monomer, weisen die erfindungsgemäßen Produkte einen NCO-Gehalt < 27 Gew.-%, bevorzugt < 25 Gew.-%, auf.

Die nach dem erfindungsgemäßen Verfahren hergestellten Polyisocyanate dienen als Ausgangsmaterialien zur Herstellung von z.B. Formkörpern (ggf. geschäumt), Lacken, Beschichtungsmitteln, Klebstoffen oder Zuschlagstoffen, wobei die enthaltenen freien NCO-Gruppen auch ggf. blockiert sein können.

Zur Blockierung der freien NCO-Gruppen eignen sich alle dem Fachmann bekannten Methoden. Als Blockierungsmittel können insbesondere Phenole (z.B. Phenol, Nonylphenol, Kresol), Oxime (z.B. Butanonoxim, Cyclohexanonoxim), Lactame (z.B. ε-Caprolactam), sekundäre Amine (z.B. Diisopropylamin), Pyrazole (z.B. Dimethylpyrazol), Imidazole, Triazole) oder Malon- und Essigsäureester verwendet werden.

Die nach dem erfindungsgemäßen Verfahren hergestellten Polyisocyanate vom Trimertyp können insbesondere zur Herstellung von Ein- und Zweikomponenten-Polyurethanlacken ggf. in Abmischung mit anderen Di- oder Polyisocyanaten des Standes der Technik, wie Uretdion-, Biuret-, Urethan- und/oder Allophanatgruppen enthaltenden Di- oder Polyisocyanaten eingesetzt werden.

Zur Umsetzung der erfindungsgemäß hergestellten Polyisocyanate zum Polyurethan können alle Verbindungen mit mindestens zwei isocyanatreaktiven Funktionalitäten einzeln oder in beliebigen Mischungen untereinander (isocyanatreaktives Bindemittel) eingesetzt werden.

Bevorzugt ist die Verwendung eines oder mehrerer, in der Polyurethanchemie an sich bekannter, isocyanatreaktiver Bindemittel wie Polyhydroxyverbindungen oder Polyamine. Als Polyhydroxyverbindungen werden besonders bevorzugt Polyester-, Polyether-, Polyacrylat- und/oder Polycarbonsäure-Polyole, ggf. auch unter Zusatz niedermolekularer, mehrwertiger Alkohole eingesetzt.

Das Äquivalentverhältnis zwischen freier Isocyanatgruppe, die ggf. auch blockiert sein kann, und isocyanatreaktiver Funktionalität des isocyanatreaktiven Bindemittels, wie z.B. OH-, NH- oder COOH, liegt zwischen 0,8 bis 3, vorzugsweise 0,8 bis 2.

Für die Beschleunigung der Vernetzungsreaktion der erfindungsgemäß hergestellten Polyisocyanate mit dem isocyanatreaktiven Bindemittel können alle aus der Polyurethanchemie bekannten Katalysatoren verwendet werden. Beispielweise können Metallsalze wie Dibutylzinn-IV-dilaurat, Zinn-II-bis(2-ethylhexanoat), Wismut-III-tris(2-ethylhexanoat), Zink-II-bis(2-ethylhexanoat) oder Zinkchlorid sowie tertiäre Amine wie 1,4-Diazabicyclo(2,2,2)oktan, Triethylamin oder Benzyldimethylamin verwendet werden.

Bei der Formulierung werden das erfindungsgemäß hergestellte, ggf. blockierte Polyisocyanat vom Trimertyp, das isocyanatreaktive Bindemittel, Katalysator(en) und ggf. die üblichen Zusätze wie Pigmente, Füllstoffe, Additive, Verlaufshilfsmittel, Entschäumer und/oder Mattierungsmittel miteinander auf einem üblichen Mischaggregat wie z.B. einer Sandmühle, ggf. unter Verwendung von Lösungsmitteln, vermischt und homogenisiert.

Als Lösungsmittel geeignet sind alle an sich bekannten üblichen Lacklösemittel wie z.B. Ethyl-und Butylacetat, Ethylen- oder Propylenglykolmono-methyl-, -ethyl- oder -propyletheracetat, 2-Butanon, 4-Methyl-2-pentanon, Cyclohexanon, Toluol, Xylol, Solventnaphtha, N-Methylpyrrolidon etc.

Die Beschichtungsmittel können in Lösung oder aus der Schmelze sowie ggf. in fester Form (Pulverlacke) nach den üblichen Methoden wie z.B. Streichen, Rollen, Gießen, Spritzen, Tauchen, dem Wirbelsinterverfahren oder durch elektrostatische Sprühverfahren auf dem zu beschichtenden Gegenstand appliziert werden.

Als Substrate eignen sich sämtliche bekannten Werkstoffe, insbesondere Metalle, Holz, Kunststoffe und Keramik.

Alle Prozentangaben sind, soweit nicht anders vermerkt, als Gewichtsprozent (Gew.-%) zu verstehen.

Die Ermittlung des NCO-Gehaltes der in den Beispielen beschriebenen Harze erfolgte durch Titration gemäß DIN 53 185.

Die dynamischen Viskositäten wurden bei 23°C mit dem Viskosimeter VT 550, Fa. Haake, Karlsruhe bestimmt. Durch Messungen bei unterschiedlichen Schergeschwindigkeiten wurde sichergestellt, dass das Fließverhalten der beschriebenen erfindungsgemäß hergestellten Polyisocyanate dem idealer Newtonscher Flüssigkeiten entspricht. Die Angabe der Schergeschwindigkeit kann deshalb entfallen.

Die Angabe 'Mol.-%' bzw. des (molaren) Verhältnisses unterschiedlicher Strukturtypen zueinander basiert auf NMR-spektroskopischen Messungen. Sie bezieht sich immer, wenn nicht anders angegeben, auf die Summe der durch die Modifizierungsreaktion (Oligomerisierung) aus den vorher freien NCO-Gruppen des zu modifizierenden Isocyanates gebildeten Strukturtypen. Die ¹³C-NMR-Messungen erfolgten auf den Geräten DPX 400, AVC 400 bzw. DRX 700 der Fa. Bruker an ca. 50 %igen Proben in trockenem CDCl₃ bzw. ca. 80 %igen Proben in D₆-DMSO bei einer Protonenfrequenz von 400 bzw. 700 MHz (¹³C-NMR: 100 bzw 176 MHz, relaxation delay: 4 sec, 2000 scans). Als Referenz für die ppm-Skale wurden geringe Mengen von Tetramethylsilan im Lösungsmittel mit einer ¹³C-chem. Verschiebung von 0 ppm bzw. das Lösungsmittel selbst mit einer Verschiebung von 77,0 ppm (CDCl₃) bzw. 43,5 ppm (D₆-DMSO) gewählt.

Die in den Beispielen und Vergleichsbeispielen beschriebenen Chemikalien und Katalysatoren wurden, wenn nicht anders vermerkt, von den Firmen Aldrich, 82018 Taufkirchen, DE oder Bayer MaterialScience, 51368 Leverkusen erhalten und sind, wenn nicht anders vermerkt, ohne weitere Reinigung eingesetzt worden.

Soweit nicht anders angegeben, wurden die Reaktionen mit frisch entgastem HDI als Edukt durchgeführt. Die Bezeichnung ,frisch entgast' bedeutet dabei, dass das eingesetzte HDI unmittelbar vor der katalytischen Umsetzung durch mindestens 30-minütiges Rühren im Vakuum (< 1 mbar) von gelösten Gasen befreit und anschließend mit Stickstoff belüftet wurde.

Alle Reaktionen wurden unter einer Atmosphäre von trockenem Stickstoff durchgeführt. Die Herstellung der Katalysatoren, so sie nicht kommerziell zugänglich waren, erfolgte nach literaturbekannten Methoden: Chem. Ber. 98, 1681-1687 (1965) und Tetrahedron, 19, 1563-1575 (1963) und darin zit. Literatur.

Eicosylphoban (9-n-Eicosyl-9-phospha-bicyclo[3.3.1]nonan / 9-n-Eicosyl-9-phospha-bicyclo-[4.2.1]nonan; Isomerengemisch) wurde von der Fa. Digital, P.O. Box 728 Lancaster, United Kingdom, LA1 5AW bezogen und ohne Reinigung verwendet. Die anderen Phobane wurden ausgehend vom P-H-funktionellen Phoban (9-phospha-bicyclo[3.3.1]nonan / 9-phospha-bicyclo[4.2.1]nonan; Isomerengemisch, Fa. Digital) in Anlehnung an J. Org. Chem. 26, 5138 - 5145 (1961) durch radikalische Addition von Olefinen an die PH-Funktion hergestellt. Mit ähnlicher Ausbeute und Isomerenzusammensetzung wurden einige dieser Verbindungen auch durch radikalische Addition von RPH₂ an 1,5-Cyclooctadien (COD) nach WO 00/52017 hergestellt. Die hierbei verwendeten RPH₂-Derivate wurden von der Fa. Cytec Canada Inc., 9061 Garner Road, P.O. Box 240, Niagara Falls, Ontario, Canada L2E 6T4, zur Verfügung gestellt. Ein Beispiel wird nachfolgend gegeben:

### Herstellung von 9-Cyclopentyl -9-phospha-bicyclo[3.3.1]nonan / 9-Cyclopentyl-9-phosphabicyclo[4.2.1]nonan; Isomerengemisch (,Cyclopentylphoban')

In einen 25 ml Rührgefäß wurden bei Zimmertemperatur unter Stickstoff 2,0 g (18,5 mmol) 1,5-Cyclooctadien (Aldrich, 82018 Taufkirchen, DE ), 71 mg Azo-bis-isovaleriansäurenitril (VAZO 67, Aldrich, 82018 Taufkirchen, DE ) und 3,8 g einer 50%igen Lösung von Mono-Cyclopentylphosphin in Toluol (Fa. Cytec) gegeben. Anschließend wurde unter Rühren auf 80°C Badtemperatur erwärmt. Nach 24 h wurde auf Zimmertemperatur abgekühlt, mit weiteren 71 mg AIBN beaufschlagt und unter Rühren weitere 24 h auf 80 °C Badtemperatur erwärmt. Anschließend wurde destillativ im Vakuum aufgearbeitet wobei 2,3 g Cyclopentylphoban-Isomerengemisch (60 % d. Theorie; Sdp: 95°C bei 0,05 mbar) erhalten wurden.

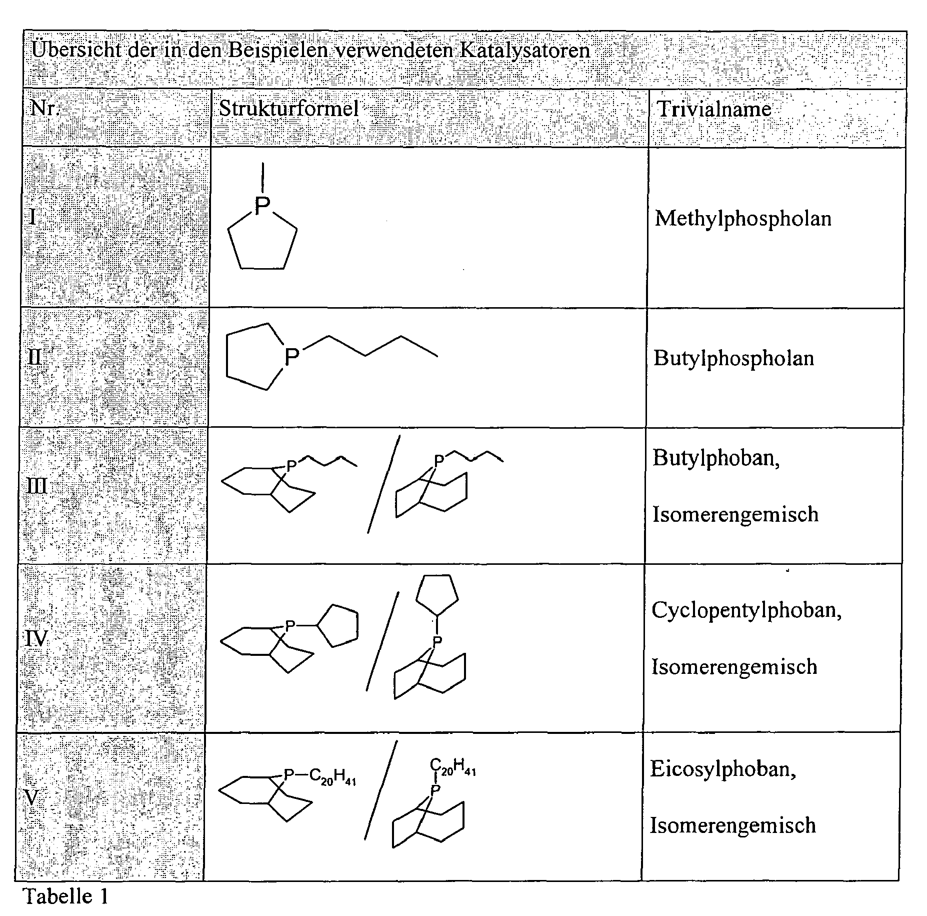

### Beispiel 1: Katalysator: 1-Methylphospholan, I

20 g (0,12 mol) frisch destilliertes HDI (Bayer MaterialScience, 51368 Leverkusen, DE ) wurden bei 60 °C zunächst im Vakuum (0,1 mbar) zur Entfernung gelöster Gase 1h gerührt, anschließend mit trockenem Stickstoff belüftet und bei 30°C mit 0,16 g (1,5 mmol) 1-Methylphospholan versetzt. Der Anstieg des Brechungsindex als Maß für die voranschreitende Umsetzung wurde verfolgt (Tab. 2).

**Tabelle 2**

| Reaktionszeit hh:mm | n_{D}²⁰ |
|---|---|
| 00:00 | 1,4523 |
| 02:40 | 1,4576 |
| 04:35 | 1,4600 |
| 19:30 | 1,4777 |
| 43:00 | 1,4970 |

Nach 43 Stunden wurde die Reaktion durch Zugabe von 55 mg (1,7 mmol) elementaren Schwefels 'abgestoppt' und das erhaltene, nahezu farblose Produktgemisch anschließend analysiert, vgl. Tabelle 3.

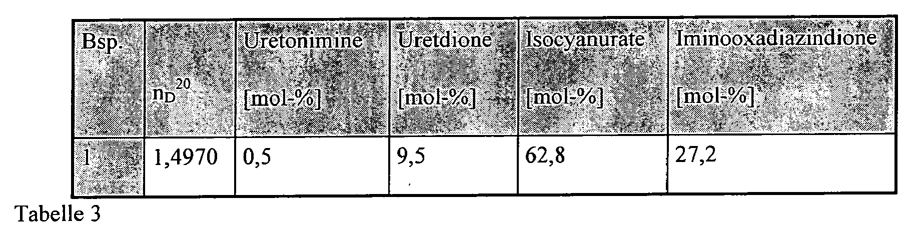

### Beispiel 2: Katalysator: 1-Butylphospholan, II

In einem doppelwandigen, durch einen externen Kreislauf auf 30°C temperierten Planschliffgefäß mit Rührer, an eine Inertgasanlage (Stickstoff/Vakuum) angeschlossenem, Rückflusskühler und Thermometer wurden 600 ml HDI vorgelegt und entgast. Nach Belüften mit Stickstoff wurden 1,48 g (10 mmol) Katalysator II zugegeben und die in Tab. 4 angegebene Zeit bei 30°C gerührt. Um eine Kontamination der Reaktionsmischung mit Luftsauerstoff auszuschließen, wurde auf eine Probenahme verzichtet und nach ca. 7 stündiger Reaktionszeit ohne vorherige Desaktivierung des Katalysators destillativ aufgearbeitet. Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,08 mbar, VV-Temperatur: 120°C, HV-Temp.: 140°C, Destillationsdauer: ca. 1 h), wobei nicht umgesetztes Monomer gemeinsam mit dem aktiven Katalysator als Destillat und das monomerenarme Polyisocyanatharz als Sumpfprodukt separiert wurden (Startdurchlauf: Beispiel 2-0)

Das den aktiven Katalysator enthaltende Destillat wurde in einer zweiten Planschliff-Rührapparatur, die identisch zur ersten aufgebaut ist, gesammelt und unmittelbar nach Destillationsende mit frisch entgastem HDI auf die Ausgangsmenge (600 ml) aufgefüllt. Anschließend wurde erneut die in Tab. 4 angegebene Zeit bei 30°C gerührt und destillativ aufgearbeitet wie oben beschrieben (Beispiel 2-A). Diese Verfahrensweise wurde insgesamt drei mal wiederholt (bis Versuch 2-C).

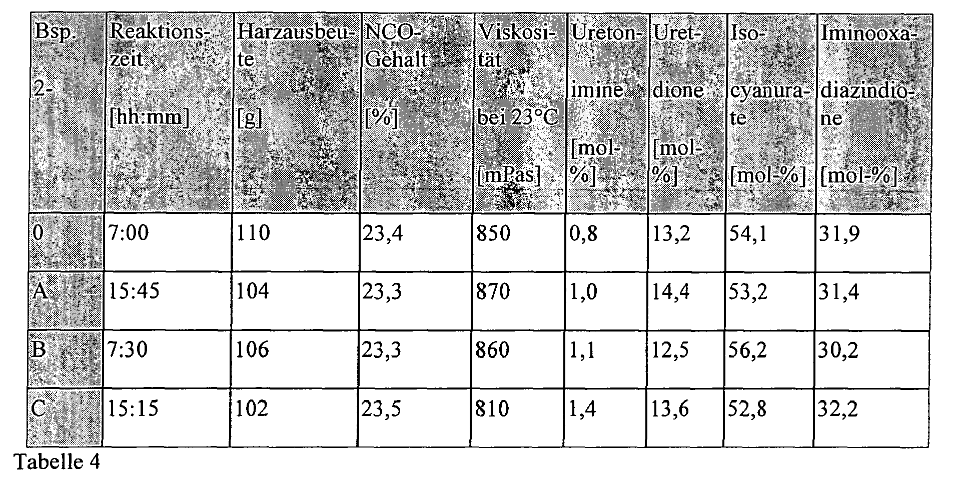

### Beispiel 3: Katalysator: Butylphoban, Isomerengemisch III

In einem doppelwandigen, durch einen externen Kreislauf auf 40°C temperierten Planschliffgefäß mit Rührer, an eine Inertgasanlage (Stickstoff/Vakuum) angeschlossenem, Rückflusskühler und Thermometer wurden 500 ml HDI vorgelegt und entgast. Nach Belüften mit Stickstoff wurden 0,59 g (3 mmol) Katalysator III zugegeben und die in Tab. 5 angegebene Zeit bei 40°C gerührt. Um eine Kontamination der Reaktionsmischung mit Luftsauerstoff auszuschließen, wurde auf eine Probenahme verzichtet und nach ca. 15 stündiger Reaktionszeit ohne vorherige Desaktivierung des Katalysators destillativ aufgearbeitet. Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,08 mbar, VV-Temperatur: 140°C, HV-Temp.: 150°C, Destillationsdauer: ca. 1 h), wobei nicht umgesetztes Monomer gemeinsam mit dem aktiven Katalysator als Destillat und das monomerenarme Polyisocyanatharz als Sumpfprodukt separiert wurden (Startdurchlauf: Beispiel 3-0)

Das den aktiven Katalysator enthaltende Destillat wurde in einer zweiten Planschliff-Rührapparatur, die identisch zur ersten aufgebaut ist, gesammelt und unmittelbar nach Destillationsende mit frisch entgastem HDI auf 540 ml aufgefüllt. Anschließend wurde erneut die in Tab. 5 angegebene Zeit bei 40°C gerührt, destillativ aufgearbeitet wie oben beschrieben (Beispiel 3-A) und anschließend mit frisch entgastem HDI auf 500 ml aufgefüllt. Diese Verfahrensweise wurde weitere zwei mal wiederholt (bis Versuch 3-C).

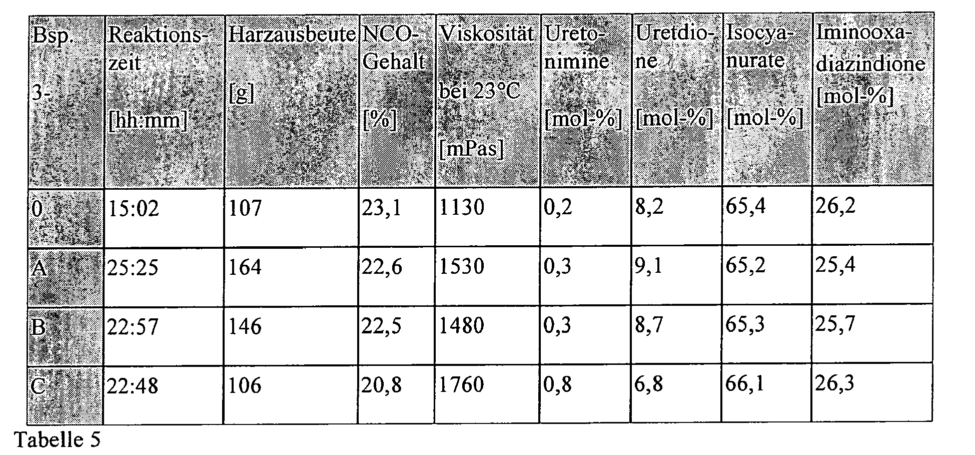

### Beispiel 4: Katalysator: Cyclopentylphoban, Isomerengemisch IV

20 g (0,12 mol) frisch destilliertes HDI wurden bei 60 °C zunächst im Vakuum (0,1 mbar) zur Entfernung gelöster Gase 1h gerührt, anschließend mit trockenem Stickstoff belüftet und bei 60°C mit 0,25 g (1,2 mmol) Cyclopentylphoban, Isomerengemisch versetzt. Der Anstieg des Brechungsindex als Maß für die voranschreitende Umsetzung wurde verfolgt (Tab. 6).

**Tabelle 6**

| Reaktionszeit hh:mm | n_{D}²⁰ |
|---|---|
| 0:00 | 1,4531 |
| 1:00 | 1,4540 |
| 2:00 | 1,4547 |
| 3:00 | 1,4555 |
| 4:00 | 1,4562 |
| 5:00 | 1,4569 |
| 22:48 | 1,4690 |
| 29:03 | 1,4724 |
| 96:00 | 1,4985 |

Die nach 3 sowie 5 Stunden Reaktionszeit erhaltenen Proben wurden analysiert, vgl. Tabelle 7.

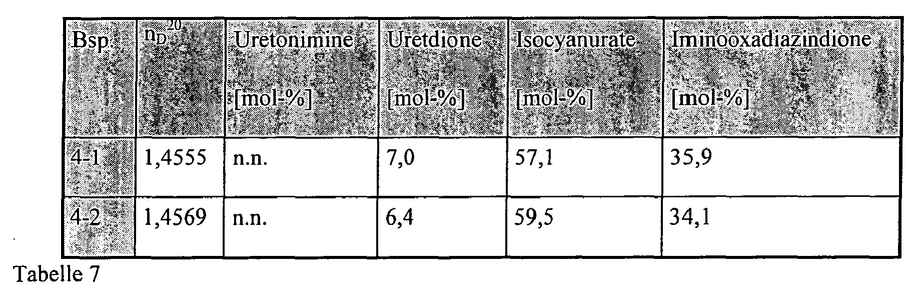

### Beispiel 5: Katalysator: Eicosylphoban, Isomerengemisch V

20 g (0,12 mol) frisch destilliertes HDI wurden bei 60 °C zunächst im Vakuum (0,1 mbar) zur Entfernung gelöster Gase 1h gerührt, anschließend mit trockenem Stickstoff belüftet und bei 70°C mit 0,13 g (0,31 mmol) Eicosylphoban, Isomerengemisch versetzt. Der Anstieg des Brechungsindex als Maß für die voranschreitende Umsetzung wurde verfolgt (Tab. 8).

**Tabelle 8**

| Reaktionzeit hh:mm | n_{D}²⁰ |
|---|---|
| 0:10 | 1,4523 |
| 1:00 | 1,4560 |
| 2:00 | 1,4600 |
| 3:00 | 1,4638 |
| 4:00 | 1,4673 |
| 5:20 | 1,4716 |

Das nach 5 Stunden und 20 Minuten erhaltene Reaktionsgemisch wurde analysiert (Tab. 9).

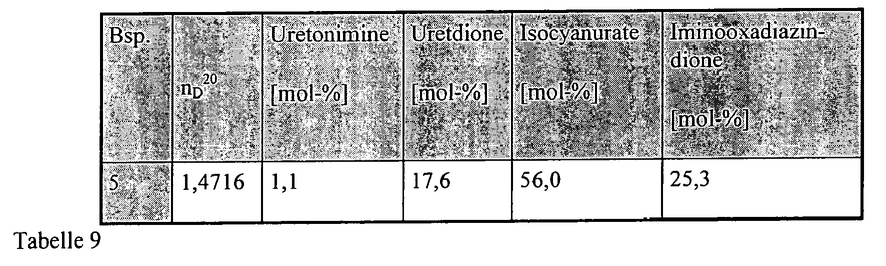

### Vergleichsbeispiele 1 bis 4:

### Katalyse mit offenkettigen Trialkylphosphinen (nicht erfindungsgemäß)

Jeweils 200 g (1,19 mol) frisch destilliertes HDI wurden bei 60 °C zunächst im Vakuum (0,1 mbar) zur Entfernung gelöster Gase 1h gerührt, anschließend mit trockenem Stickstoff belüftet und bei:
Vergleichsbeispiele 1) und 2) 60 °C
Vergleichsbeispiel 2) 120 °C bzw.
Vergleichsbeispiel 3) 180 °C
mit jeweils 0,75g (3,7 mmol) Tri-n-butylphosphin (TBP, Firma Cytec) versetzt und bis zum Erreichen des in Tab. 10 angegebenen Brechungsindex' der Rohlösung unter einer Stickstoffatmosphäre umgesetzt. Anschließend wurde durch Zugabe von jeweils 4 g (26 mmol) p-Toluolsulfonsäuremethylester und einstündiges Nachrühren bei 80°C die Weiterreaktion sicher unterbunden ('abgestoppt'), erkennbar daran, dass sich der Brechungsindex der Mischung nicht mehr änderte (vgl. Tab. 10, n_{D}²⁰ (Stop)).

Die Rohprodukte wurden anschließend durch Dünnschichtdestillation bei 120 °C/0,1 mbar in einem Kurzwegverdampfer vom nicht umgesetzten Monomer befreit. Anschließend wurde die Produktzusammensetzung NMR-spektroskopisch bestimmt, vgl. Tabelle 10.

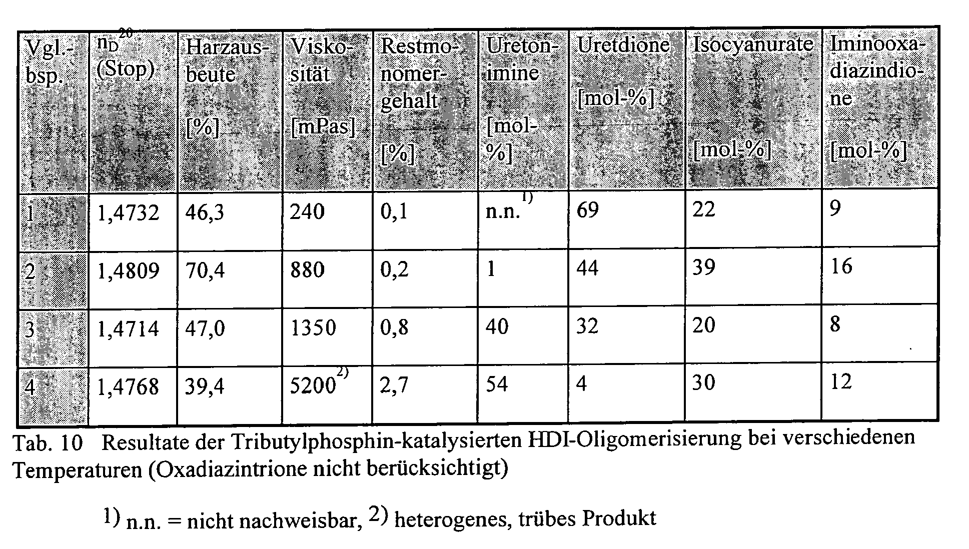

### Vergleichsbeispiel 5:

### Katalyse mit offenkettigen Trialkylphosphinen, Gemisch aus aliphatischem und aromatischem Diisocyanat (nicht erfindungsgemäß)

Ein Gemisch aus 260 g (1,5 mol) frisch destilliertem HDI und 130 g (0,75 mol) frisch destilliertem TDI (Gemisch der 2,4- und 2,6-Isomeren im Verhältnis 4:1) wurde bei 60 °C zunächst im Vakuum (0,1 mbar) zur Entfernung gelöster Gase 1h gerührt, anschließend mit trockenem Stickstoff belüftet und bei 60 °C mit 80 mg (0,4 mmol) TBP versetzt. Nach Erreichen des in Tab. 11 angegebenen Brechungsindex' der Rohlösung wurde durch Zugabe von 15 mg (0,47 mmol) elementaren Schwefels und einstündigem Nachrühren bei 60°C die Weiterreaktion sicher unterbunden ('abgestoppt'), erkennbar daran, dass sich der Brechungsindex der Mischung nicht mehr änderte (vgl. Tab. 11, n_{D}²⁰ (Stop) und analysiert.

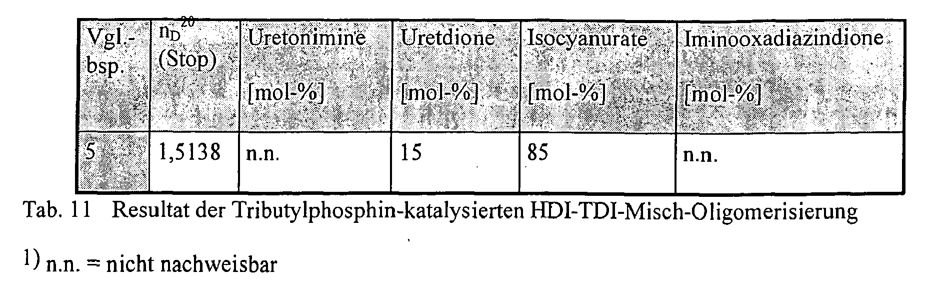

### Vergleichsbeispiele 6 bis 9:

### Katalyse mit partiell aromatisch substituierten sowie mit ster. gehinderten dreiwertigen Phosphorverbindungen (nicht erfindungsgemäß)

Jeweils 100 g HDI wurden bei 30°C eine Stunde unter Rühren im Vakuum (0,5 mbar) entgast, mit Stickstoff belüftet und anschließend unter Rühren zunächst mit jeweils 0,1 mol-% (bezogen auf vorgelegtes HDI) der folgenden Phosphorverbindungen versetzt:
6) Dimethylphenylphosphin,
7) 1-Phenyl-3-methyl-phospholen-3
8) Tri(tertiär-butyl)phosphin bzw.
9) Tri(iso-propyl)phosphin.

Da in keinem Fall eine nennenswerte Erhöhung des Brechungsindex' der Reaktionsmischung im Verlaufe von 8 Stunden eintrat, wurden anschließend bei der gleichen Temperatur weitere 0,1 mol-% (bezogen auf vorgelegtes HDI) der jeweils verwendeten Phosphorverbindung zugegeben und weitere 8 Stunden gerührt. In keinem Fall stieg der Brechungsindex der Reaktionsmischung dabei auf mehr als 1,4530 an, was eine zu vernachlässigende Aktivität der beschriebenen Phosphorverbindungen hinsichtlich einer Isocyanat-Oligomerisierungsreaktion belegt.

## Patentansprüche

1. Verfahren zur Herstellung von Polyisocyanaten aus aliphatischen und/oder cycloaliphatischen Isocyanaten mit einem Anteil an Isocyanurat- und Iminooxadiazindion-Strukturen im gebildeten Polyisocyanat von oberhalb 60 mol%, einem Anteil an Uretdionstrukturen unterhalb 25 mol% und einem Anteil an Carbodiimid- und Uretoniminstrukturen unter 5 mol%, bezogen auf die Summe aller gebildeten Strukturtypen, bei dem als Katalysatoren Heterocyclen der Formel (I) eingesetzt werden 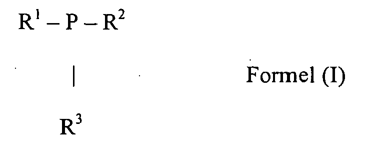 wobei
R¹ ein ggf. cyclischer, aliphatischer C₁-C₅₀-Rest ist, der ein- oder mehrfach ungesättigt und/oder ein- oder mehrfach C₁-C₂₀ alkyl- oder alkoxy- substituiert sein kann und
R², R³ untereinander und mit dem Phosphoratom sowie ggf. mit R¹ einen cycloaliphatischen C₂-C₂₀-Rest bilden, der ein- oder mehrfach C₁-C₂₀ alkyl- oder alkoxysubstituiert, polycyclisch und/oder ein- oder mehrfach ungesättigt sein kann.

2. Verfahren gemäß Anspruch 1, **dadurch gekennzeichnet, dass** in Formel (I)
R¹ ein ggf. cyclischer, aliphatischer C₁-C₁₂-Rest ist, der ein- oder mehrfach C₁-C₈ alkyl- oder alkoxy- substituiert sein kann und
R², R³ untereinander und mit dem Phosphoratom einen gesättigten cycloaliphatischen C₄-C₆-Rest bilden, der ein- oder mehrfach C₁-C₂₀ alkyl- oder alkoxy- substituiert und/oder bicyclisch sein kann.

3. Verfahren gemäß Anspruch 1 oder 2, **dadurch gekennzeichnet, dass** als Verbindungen der Formel (I) 1-Methyl-1-phospholan, 1-Ethyl-1-phospholan, 1-Propyl-1-phospholan, 1-Butyl-1-phospholan, 1-Pentyl-1-phospholan, 1-Hexyl-1-phospholan, 1-Octyl-1-phospholan, 9-Methyl-9-phosphabicyclononan, 9-Ethyl-9-phosphabicyclononan, 9-Propyl-9-phosphabicyclononan, 9-Butyl-9-phosphabicyclononan, 9-Pentyl-9-phosphabicyclononan, 9-Hexyl-9-phosphabicyclononan, 9-Octyl-9-phosphabicyclononan, 9-Dodecyl-9-phosphabicyclononan, 9-Eicosyl-9-phosphabicyclononan oder als beliebige Mischungen untereinander eingesetzt werden.

4. Verfahren gemäß einem der Ansprüche 1 bis 3, **dadurch gekennzeichnet, dass** die Umsetzung bei Temperaturen von 0 bis 150°C durchgeführt wird.

5. Verfahren gemäß einem der Ansprüche 1 bis 4, **dadurch gekennzeichnet, dass** die Umsetzung der Isocyanate unter Inertgasatmosphäre durchgeführt wird.
